# EUROPEAN PATENT SPECIFICATION

(11) **EP 1 562 785 B1**
(45) Date of publication and mention of the grant of the patent: **20.06.2012**
(21) Application number: 03760970.8
(22) Date of filing: 20.06.2003
(51) Int. Cl.: B60N 2/22, B60N 2/28

(54) **CHILD SEAT**
KINDERSITZ
SIEGE POUR ENFANT

(30) Priority: 20.06.2002 NL 1020910
(43) Date of publication of application: 17.08.2005
(73) Proprietor: BÉBÉCAR - Utilidades para Criança, S.A., 4509-903 Caldas de S. Jorge (PT)
(72) Inventor: DREXLER, Joannes, Herman, (NL)
(74) Representative: Besnard, Christophe Laurent
(86) International application number: PCT/NL2003/000453
(87) International publication number: WO 2004/000602

(56) References cited:
- EP-A- 0 751 033
- WO-A-91/03388
- DE-A- 19 925 306
- DE-U- 20 109 118

## Description

The invention relates to a child seat for use in a vehicle, which child seat is designed to be placed on a vehicle seat and comprises a seat part and an upright part, the upright part comprising a backrest part that is adjustable in height relative to the seat part and a headrest part that is adjustable in height relative to the seat part and the adjustable backrest part.

Such a child seat is known, for example from DE 8534265 U1. In order to provide optimum safety in the event of a collision, it is important for the height of the headrest and the height of the backrest part to be adapted to the length of the child and to be set in the correct mutual ratio. In the case of the known child's seat the height of the headrest and the height of the adjustable backrest part are adjustable independently of each other. A disadvantage of this is that a height adjustment of both the headrest and the backrest part is laborious and is consequently often not performed properly, for example is not made in the correct mutual ratio.

Another child seat is disclosed in EP 751 033 A2, on which the preamble of claim 1 is based. This known child seat can be placed on a vehicle seat and can be fixed with the seat belt. The known child seat has a seat part and a backrest part. On the backrest part a headrest part is provided. The height of the headrest part is adjustable with respect to the backrest part. Releasable locking means are provided to lock the adjustable headrest part with respect to the backrest part.

From DE 199 25 306 is known a vehicle seat with a headrest part, a middle backrest part and a lower backrest part which are positioned between stationary side parts. The lower backrest part is firmly connected to the side parts and forms with them a rigid U-shaped frame. The headrest part and the middle backrest part are connected with each other by means of a gear rack construction. The gear rack construction is operated by a hand operated wheel which is coupled to a drive shaft which is coupled to the middle backrest part. The gear rack construction enables the headrest and the backrest to shift in height by turning the hand operated wheel.

The object of the invention is to provide a child seat with improved safety.

This object is achieved by a child seat according to claim 1.

Owing to the fact that the headrest and the adjustable backrest part of the child seat according to the invention are connected to each other in this way, the height adjustment of the headrest and the adjustable backrest part are dependent upon each other. This therefore means that the adjustment of the headrest and the backrest part can be made in one operation and in a fixed, predetermined ratio by pulling up or pushing down the headrest at the handgrip. A setting of both the headrest and the adjustable backrest part at the correct height and in the correct mutual ratio is guaranteed in the case of the child seat according to the invention, so that better protection, and therefore greater safety, of the child is achieved.

A height adjustment of the headrest preferably leads to a height adjustment of the adjustable backrest part that is approximately half that of the headrest. It has been found that this ratio corresponds well to the height ratio between the head and the back in children of about 1 to 12 years of age.

Further embodiments and advantages of the invention emerge in the description below with reference to the drawing, in which:
Fig. 1 shows a preferred embodiment of a child seat according to the invention in its smallest position;
Fig. 2 shows the child seat of Fig. 1 in a larger position; and
Fig. 3 shows diagrammatically a preferred embodiment of a connection between a headrest part and an adjustable backrest part.

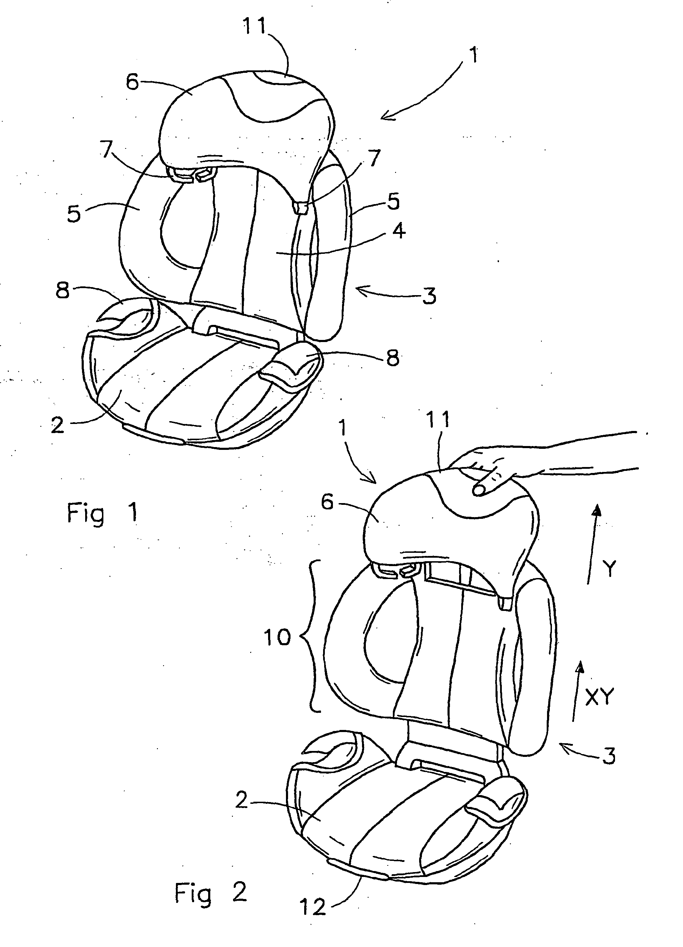

Fig. 1 shows a child seat 1, comprising a seat part 2 and an upright part 3. The upright part 3 comprises a lumbar support 4 and side supports 5, which are provided on either side of the lumbar support 4. The upright part 3 further comprises a headrest 6. The headrest 6 is provided on both sides with a belt guide 7, in which a shoulder part of a car seatbelt can be accommodated. In an alternative embodiment (not shown) the adjustable backrest part can be provided with belt guides for the shoulder part, instead of or in addition to those in the headrest. The seat part 2 is provided on both sides with a belt guide 8, in which a hip part of the car seatbelt can be accommodated. When the child seat 1 shown in the drawing is being used, the child sits down on the seat and the car seatbelt is then placed with the hip part over the child's legs, the hip part of the belt being inserted into the guides 8. During this process the shoulder part of the belt passes along the front of the child, guided in one of the belt guides 7.

As can be seen from Fig. 2, the headrest 6 is adjustable in height relative to the seat part 2. The lumbar support 4 and side supports 5 in this embodiment together form a height adjustable backrest part, which is indicated by reference numeral 10. The adjustable backrest part 10 is adjustable in height relative to the seat part 2. The headrest part 6 is adjustable relative to the adjustable backrest part 10.

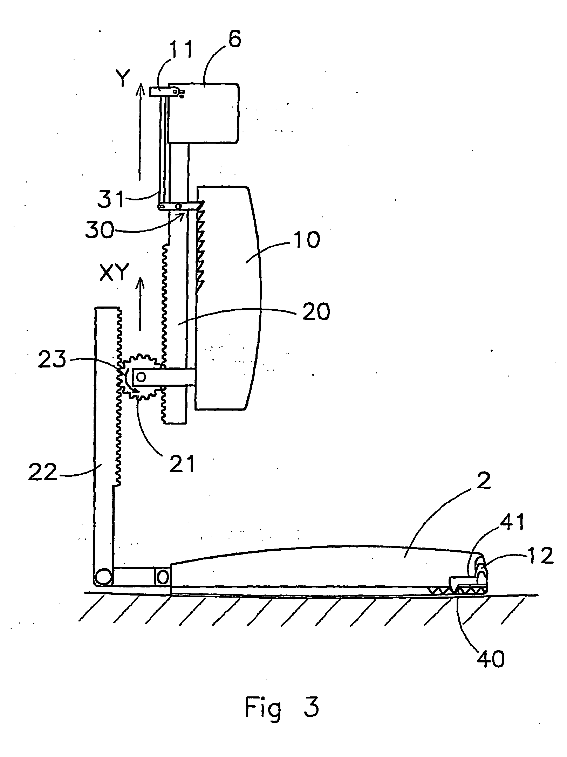

The child seat 1 is provided with locking means 30 (see Fig. 3), which lock the headrest part 6 and the backrest part 10 with respect to each other, so that the set height is retained. Of course also locking means wit another design can be provided which lock the headrest part 6 and the backrest part 10 in one way or another. A handgrip 11, which is provided on the back of the headrest 6 at the top, is connected to an operating mechanism 31 for unlocking the lock. By operating the handgrip 11, as shown in Fig. 2, the lock is consequently released, and the headrest part 6 and the backrest part 10 can be shifted in height by pulling the headrest 6 up or pushing it down using the handgrip 11.

The headrest 6 is connected to the backrest part 10 in such a way that when the headrest is slid upwards over a distance y relative to the seat part 2, the backrest part 10 moves upwards in the same direction over a distance xy. The distance xy is less than the distance y. The ratio y:xy preferably corresponds to approximately 2:1, because it has been found from ergonomic analysis that this ratio corresponds well to the height ratio between the head and the back in children.

The seat part 2 is also adjustable, it being possible to slide the seat part 2 forwards or backwards relative to the upright part 3. This means that the seat part 2 can also be adapted to the length of the child, so that the child's legs are adequately supported. This position of the seat part 2 is locked by means of locking means 40 (see Fig. 3). A handgrip 12 is provided on the front side of the seat part 2, which handgrip is connected to an operating mechanism 41 for unlocking the seat part 2, so that the latter can be slid forwards or backwards.

Fig. 3 shows diagrammatically how the adjustable backrest part 10 and the headrest part 6 are preferably connected. The headrest 6 is fixedly connected to a gear rack 20. The adjustable backrest part 10 is connected to the centre of rotation of a gearwheel 21 in such a way that the gearwheel 21 can rotate relative to the backrest part 10. The gearwheel 21 meshes with the gear rack 20. The seat 2 is connected to a gear rack 22. The gear rack 22 is in mesh with the gearwheel 21 diametrically opposite the gear rack 20. Starting from an unlocked state, the headrest 6 with the gear rack 20 can be drawn upwards, for example, over a distance y. As a result of this, the gearwheel 21 starts to rotate anticlockwise in the figure, as indicated by the arrow 23. Through the rotation of the gearwheel 21, the gearwheel 21 moves along the teeth of the gear rack 22 over a distance xy, so that the backrest part 10 moves upwards over a distance xy. In the example shown the ratio y:xy is approximately equal to 2:1. A different ratio could be obtained by, for example, a geared transmission (not shown). It must be understood that the ratio of 2:1 as mentioned in the case of this exemplary embodiment must not be regarded as limiting. Other desired ratios such as 3:1 are also quite possible.

## Claims

1. Child seat (1) for use in a vehicle, which child seat (1) is designed to be placed on a vehicle seat and comprises:
- a seat part (2), which is provided with a belt guide (8) for the hip part of the vehicle seat belt, and
- an upright part (3), comprising a backrest part (10) and a headrest part (6), said headrest part (6) being and/or said backrespt part (10) being provided with a belt guide (7) for the shoulder part of the vehicle seat belt,
wherein the headrest part (6) is adjustable in height relative to the seat part (2) and the backrest part (10), and
wherein releasable locking means (30) are provided between the headrest part (6) and the backrest part (10) locking the headrest part (6) and the backrest part (10) with respect to each other at a set height,
**characterized in that** the headrest part (6) is provided on the back at the top with a handgrip (11) for pulling up or pushing down the headrest (6), which handgrip (11) is connected to an operating mechanism (31) for releasing the locking means (30),
**in that** the backrest part (10) is adjustable in height relative to the seat part (2), and
**in that** the headrest (6) and the adjustable backrest part (10) are connected to each other by a gear rack construction (20, 21, 22) enabling both the headrest part (6) and the backrest part (10) to shift in height relative to the seat part (2), such that a height adjustment of the headrest (6) by pulling it up or pushing it down after releasing the locking means (3) by means of the handgrip (11) leads simultaneously to a different, preferably smaller, height adjustment of the adjustable backrest part (10).

2. Chid seat according to claim 1, **characterized in that** a height adjustment of the headrest (6) leads to a height adjustment of the adjustable backrest part (10) that is approximately half that of the headrest (6).

3. Child seat according to one of the preceding claim, **characterized in that** the backrest part comprises a lumbar support (4) and side supports (5).

4. Child seat according to one of the preceding claims, **characterized in that** the seat part (2) is adjustable.

5. Child seat according to claim 4, **characterized in that** the seat part (2) is slideable forwards and backwards relative to the upright part (3).

6. Child seat according to claim 4 or 5, **characterized in that** a handgrip (12) is provided on the front side of the seat part (2), which handgrip (12) is connected to an operating mechanism for unlocking the seat part (2) such that the latter can be slid forwards or backwards.

## Patentansprüche

1. Kindersitz (1) zur Verwendung in einem Fahrzeug, wobei der Kindersitz (1) dazu gestaltet ist, auf einem Fahrzeugsitz plaziert zu werden, und umfaßt:
- ein Sitzteil (2), welches mit einer Gurtführung (8) für den Hüftabschnitt des Fahrzeugsitzgurtes ausgestattet ist, und
- ein aufrechtes Teil (3), umfassend einen Rückenlehnenabschnitt (10) und einen Kopfstützenabschnitt (6), wobei der Kopfstützenabschnitt (6) und/oder der Rückenlehnenabschnitt (10) mit einer Gurtführung (7) für den Schulterabschnitt des Fahrzeugsitzgurtes ausgestattet sind,
wobei der Kopfstützenabschnitt (6) relativ zu dem Sitzteil (2) und dem Rückenlehnenabschnitt (10) in der Höhe einstellbar ist und
wobei lösbare Arretiermittel (30) zwischen dem Kopfstützenabschnitt (6) und dem Rückenlehnenabschnitt (10) angeordnet sind, die den Kopfstützenabschnitt (6) und den Rückenlehnenabschnitt (10) relativ zueinander in einer eingestellten Höhe arretieren,
**dadurch gekennzeichnet, daß** der Kopfstützenabschnitt (6) an der Rückseite am oberen Ende mit einem Handgriff (11) zum Hochziehen oder Herunterdrücken der Kopfstütze (6) ausgestattet ist, wobei der Handgriff (11) mit einem Bedienmechanismus (31) zum Lösen der Arretiermittel (30) verbunden ist,
daß der Rückenlehnenabschnitt (10) relativ zu dem Sitzteil (2) der Höhe nach verstellbar ist und
daß die Kopfstütze (6) und der verstellbare Rückenlehnenabschnitt (10) miteinander durch eine Getriebe-Trägerkonstruktion (20, 21, 22) verbunden sind, die sowohl den Kopfstützenabschnitt (6) als auch den Rückenlehnenabschnitt (10) befähigt, sich relativ zu dem Sitzteil (2) der Höhe nach zu verschieben, so daß eine Höhenverstellung der Kopfstütze (6) nach dem Lösen der Arretiermittel (3) durch sein Hochziehen oder Herunterdrücken mittels des Handgriffs (11) gleichzeitig zu einer unterschiedlichen, bevorzugt kleineren, Höhenverstellung des verstellbaren Rückenlehnenabschnitts (10) führt.

2. Kindersitz nach Anspruch 1, **dadurch gekennzeichnet, daß** die Höhenverstellung der Kopfstütze (6) zu einer Höhenverstellung des einstellbaren Rückenlehnenabschnitts (10) führt, die näherungsweise halb so groß wie diejenige der Kopfstütze (6) ist.

3. Kindersitz nach einem der vorhergehenden Ansprüche, **dadurch gekennzeichnet, daß** der Rückenlehnenabschnitt eine Lendenwirbelstütze (4) und Seitenstützen (5) umfaßt.

4. Kindersitz nach einem der vorhergehenden Ansprüche, **dadurch gekennzeichnet, daß** das Sitzteil (2) einstellbar ist.

5. Kindersitz nach Anspruch 4, **dadurch gekennzeichnet, daß** das Sitzteil (2) relativ zu dem aufrechten Teil (3) vorwärts und rückwärts verschiebbar ist.

6. Kindersitz nach Anspruch 4 oder 5, **dadurch gekennzeichnet, daß** ein Handgriff (12) an der Vorderseite des Sitzteils (2) angeordnet ist, wobei der Handgriff (12) mit einem Bedienmechanismus zum Entriegeln des Sitzteils (2) verbunden ist, so daß das letztere vorwärts und rückwärts verschoben werden kann.

## Revendications

1. Siège pour enfant (1) pour utilisation dans un véhicule, lequel siège pour enfant (1) est conçu pour être placé sur un siège de véhicule et comprend :
- une partie d'assise (2), qui est pourvue d'un guide de ceinture (8) pour la partie de hanche de la ceinture de sécurité de véhicule, et
- une partie verticale (3), comportant une partie de dossier (10) et une partie d'appui-tête (6), ladite partie d'appui-tête (6) et/ou ladite partie de dossier (10) étant pourvue d'un guide de ceinture (7) pour la partie d'épaule de la ceinture de sécurité de véhicule,
la partie d'appui-tête (6) étant réglable en hauteur par rapport à la partie d'assise (2) et à la partie de dossier (10), et
des moyens de blocage libérable (30) étant prévus entre la partie d'appui-tête (6) et la partie de dossier (10) en bloquant la partie d'appui-tête (6) et la partie de dossier (10) l'une par rapport à l'autre à une hauteur réglée,
**caractérisé en ce que** la partie d'appui-tête (6) est pourvue sur l'arrière au sommet d'une poignée (11) pour tirer vers le haut ou pousser vers le bas l'appui-tête (6), laquelle poignée (11) est reliée à un mécanisme d'actionnement (31) pour libérer les moyens de blocage (30),
**en ce que** la partie de dossier (10) est réglable en hauteur par rapport à la partie d'assise (2), et
**en ce que** l'appui-tête (6) et la partie de dossier réglable (10) sont reliées l'une à l'autre par une construction à pignon-crémaillère (20, 21, 22) permettant à la fois à la partie d'appui-tête (6) et à la partie de dossier (10) de se déplacer en hauteur par rapport à la partie d'assise (2), de telle sorte qu'un réglage de la hauteur de l'appui-tête (6) en le tirant vers le haut ou en le poussant vers le bas après libération des moyens de blocage (3) au moyen de la poignée (11), conduit simultanément à un réglage différent, de préférence plus petit, de la hauteur de la partie de dossier réglable (10).

2. Siège pour enfant selon la revendication 1, **caractérisé en ce qu'**un réglage de la hauteur de l'appui-tête (6) conduit à un réglage de la hauteur de la partie de dossier réglable (10) qui est approximativement la moitié de celui de l'appui-tête (6).

3. Siège pour enfant selon l'une des revendications précédentes, **caractérisé en ce que** la partie de dossier comporte un support lombaire (4) et des supports latéraux (5).

4. Siège pour enfant selon l'une des revendications précédentes, **caractérisé en ce que** la partie d'assise (2) est réglable.

5. Siège pour enfant selon la revendication 4, **caractérisé en ce que** la partie d'assise (2) peut coulisser vers l'avant et vers l'arrière par rapport à la partie verticale (3).

6. Siège pour enfant selon la revendication 4 ou 5, **caractérisé en ce qu'**une poignée (12) est prévue sur le côté avant de la partie d'assise (2), laquelle poignée (12) est reliée à un mécanisme d'actionnement destiné à débloquer la partie d'assise (2) de telle sorte que cette dernière peut être amenée à coulisser vers l'avant ou vers l'arrière.
